# DEMANDE DE BREVET EUROPEEN

(11) **EP 4 471 506 A1**
(43) Date de publication de la demande: **04.12.2024**
(21) Numéro de dépôt: 23176779.9
(22) Date de dépôt: 01.06.2023
(51) Int. Cl.: G04B 37/22, A44C 27/00, B33Y 10/00, B33Y 70/00, B33Y 80/00, A44C 5/00

(54) **COMPOSANT HORLOGER LÉGER ET ROBUSTE**

(71) Demandeur: ROLEX SA, 1211 Genève 26 (CH)
(72) Inventeur: LISIECKI, Bruno, 74000 Annecy (FR); MONDOUX, Christophe, 1205 Genève (CH)
(74) Mandataire: Moinas & Savoye SARL

(57) **Abrégé**

Composant, notamment composant horloger, caractérisé en ce qu'il comprend au moins un coeur poreux, comprenant un premier matériau ou à base d'un premier matériau, de densité inférieure ou égale à 80%, voire inférieure ou égale à 60%, voire inférieure ou égale à 50%, de la densité du premier matériau massif, et en ce que le au moins un coeur poreux présente au moins une zone pour laquelle sa porosité au niveau de sa surface est inférieure à sa porosité en dehors de sa surface.

## Description

La présente invention concerne un composant horloger, notamment un composant horloger d'habillage, voire plus généralement tout autre composant, même en dehors du domaine de l'horlogerie. Elle porte aussi sur une pièce d'horlogerie, notamment une montre bracelet, comprenant au moins un tel composant horloger. Elle porte aussi sur un procédé de fabrication d'un tel composant horloger.

Un composant horloger, et plus particulièrement un composant horloger d'habillage, doit atteindre de nombreuses propriétés mécaniques, parfois antinomiques. Parmi ces propriétés recherchées, nous pouvons mentionner :
- La légèreté, qui permet de rendre le port d'une pièce d'horlogerie confortable ;
- Une apparence très attrayante, exempte de défaut, compatible avec les exigences esthétiques de l'horlogerie de luxe ;
- La robustesse, pour résister aux contraintes extérieures subies par une pièce d'horlogerie, de sorte que le composant horloger conserve une même apparence de manière pérenne, et plus généralement l'ensemble de ses propriétés mécaniques de manière pérenne.

En pratique, les solutions existantes correspondent à des compromis entre ces propriétés. En général, les composants horlogers sont ainsi réalisés de manière massive à partir d'un matériau pouvant être à la fois léger et dur. Ces solutions existantes présentent toutefois des limites, et il existe un besoin d'identifier des nouvelles solutions qui permettent d'optimiser les propriétés et/ou l'aspect des composants horlogers.

Un objet de la présente invention est donc de proposer une solution pour obtenir un composant, en particulier un composant horloger, léger et robuste, de manière améliorée par rapport à l'état de la technique.

A cet effet, l'invention repose sur un composant, notamment un composant horloger, caractérisé en ce qu'il comprend au moins un coeur poreux, comprenant un premier matériau ou à base d'un premier matériau, de densité inférieure ou égale à 80%, voire inférieure ou égale à 60%, voire inférieure ou égale à 50%, de la densité du premier matériau massif, et en ce que le au moins un coeur poreux présente au moins une zone pour laquelle sa porosité au niveau de sa surface est inférieure à sa porosité en dehors de sa surface.

L'invention repose aussi sur un procédé de fabrication d'un composant, notamment d'un composant horloger, caractérisé en ce qu'il comprend une étape de réalisation d'un coeur poreux, comprenant un premier matériau ou à base d'un premier matériau, de densité inférieure ou égale à 80%, voire inférieure ou égale à 60%, voire inférieure ou égale à 50%, de la densité du premier matériau massif, le coeur poreux présentant au moins une zone pour laquelle sa porosité au niveau de sa surface est inférieure à sa porosité en dehors de sa surface.

L'invention est plus précisément définie par les revendications.

Ces objets, caractéristiques et avantages de la présente invention seront exposés en détail dans la description suivante de modes de réalisation particuliers faits à titre non-limitatif en relation avec les figures jointes parmi lesquelles :
La figure 1 illustre des structures élémentaires en treillis obtenues par une première étape d'un procédé de fabrication d'un composant, notamment d'un composant horloger, selon un mode de réalisation de l'invention.
La figure 2 illustre des structures élémentaires de type TPMS (pour la dénomination anglaise de Triply Periodic Minimal Surface) obtenues par la première étape d'un procédé de fabrication d'un composant, notamment d'un composant horloger, selon un autre mode de réalisation de l'invention.
Les figures 3a et 3b illustrent les coeurs poreux d'une carrure de montre issus de la première étape du procédé de fabrication d'un composant horloger respectivement selon deux variantes du mode de réalisation de l'invention.
Les figures 4a et 4b illustrent deux vues du coeur poreux d'une ébauche de carrure issue de la première étape du procédé de fabrication d'un composant horloger selon une troisième variante du mode de réalisation de l'invention.

Le concept de l'invention consiste à proposer un composant comprenant au moins un coeur poreux, très léger, mais robuste. En particulier, le composant horloger peut se réduire à un coeur poreux. Selon une déclinaison particulière de l'invention, au moins une portion ou une région du composant pourrait comprendre un coeur poreux, le reste du composant horloger pouvant comprendre toute autre architecture, notamment conventionnelle. De plus, le composant comprend tout ou partie de sa surface, c'est-à-dire au moins une zone dans laquelle il comprend une porosité inférieure au niveau de sa surface à une porosité mesurée plus à l'intérieur du composant, en dehors de sa surface.

Dans tous les cas, le résultat est un composant pour lequel aucun compromis n'est nécessaire, puisqu'il regroupe à la fois la légèreté maximale possible avec une grande robustesse, et optionnellement une grande dureté, au moins dans ladite zone de porosité de surface réduite. En complément, de manière avantageuse, l'état de surface du composant est tel qu'il présente une apparence très attrayante. Optionnellement, le composant peut comprendre un revêtement de surface se présentant sous la forme d'une couche de décoration, en particulier d'une fine couche superficielle de décoration.

En remarque, dans l'ensemble du texte, nous utiliserons l'expression « à base d'un matériau » pour désigner le fait de comprendre au moins 50% en poids dudit matériau.

Un procédé de fabrication d'un composant horloger selon un mode de réalisation de l'invention va maintenant être détaillé.

Le procédé comprend d'abord une première étape de réalisation d'un coeur poreux, en un premier matériau ou à base d'un premier matériau, de densité inférieure ou égale à 80%, voire inférieure ou égale à 60%, voire inférieure ou égale à 50%, de la densité du premier matériau massif. La densité du coeur poreux est ainsi particulièrement faible en regard de la densité du premier matériau massif. La densité considérée est la densité globale ou moyenne du coeur poreux.

Cette première étape peut être réalisée par le biais de plusieurs variantes de réalisation du procédé.

Selon une variante de réalisation particulière, l'étape de réalisation du coeur poreux comprend une étape d'attaque chimique d'une ébauche massive formée dans le premier matériau. Dans cette première variante de réalisation, la première étape du procédé comprend donc une première sous-étape de réalisation d'une ébauche massive du coeur du composant horloger, dans le premier matériau ou à base du premier matériau. La première étape du procédé comprend ensuite une deuxième sous-étape d'attaque chimique de l'ébauche massive formée dans le premier matériau, pour former comme résultat un coeur poreux. Un tel coeur poreux peut alors se présenter sous la forme d'une mousse, par exemple une mousse métallique.

Selon une autre variante de réalisation particulière, l'étape de réalisation du coeur poreux peut reposer sur la formation de bulles dans un métal liquide qui est ensuite solidifié sous forme de mousse métallique.

Selon encore une autre variante de réalisation particulière, l'étape de réalisation du coeur poreux peut reposer sur une technique d'infiltration d'un métal liquide au sein d'un corps poreux constitué d'un matériau de moulage. Après solidification du métal, le matériau de moulage formant le corps poreux est éliminé.

Selon encore une autre variante de réalisation particulière, l'étape de réalisation du coeur poreux comprend une étape de fabrication additive, pour former directement un coeur poreux dans le premier matériau ou à base du premier matériau. Par exemple, la technique de fusion laser de poudre ou sur lit de poudre (« Power Bed Fusion » en anglais) permet de réaliser une architecture contrôlée, avec une structure précise et une bonne définition de l'ouverture des pores et une bonne maitrise de l'anisotropie.

Dans tous les cas, le coeur poreux présente une densité inférieure ou égale à 80%, voire inférieure ou égale à 60%, voire inférieure ou égale à 50%, de la densité du premier matériau massif. Autrement dit, le coeur poreux présente une masse inférieure ou égale à 80%, voire inférieure ou égale à 60%, voire inférieure ou égale à 50%, à celle de la masse d'un corps qui occuperait le même volume que celui du coeur poreux du composant horloger et qui se présenterait intégralement dans le premier même matériau, de manière massive.

Le coeur poreux peut présenter une multitude d'aspects selon l'invention. Par exemple, il peut s'agir d'un coeur poreux présentant une forme de squelette formé par un réseau poreux régulier ou irrégulier, notamment de type en treillis, ou les structures connues par le sigle TPMS (pour la dénomination anglaise de Triply Periodic Minimal Surface), ou encore les structures alvéolaires, cellulaires, ou trabéculaires. Notamment, le coeur poreux peut par exemple être en mousse métallique.

Le coeur poreux peut se présenter en une multitude de matériaux. Par exemple, il peut s'agir d'un coeur poreux comprenant un premier matériau ou à base d'un premier matériau se présentant sous la forme d'un métal ou d'un alliage métallique, ou d'un superalliage métallique, notamment comprenant un ou des éléments parmi Fe, Mg, Al, Ti, Au, Pd, Pt, Ni, Si, et/ou Co. Ce premier matériau peut aussi être un alliage amorphe ou partiellement amorphe, ou une céramique, par exemple une céramique à base d'alumine ou de zircone.

Selon une variante de réalisation du coeur poreux, ce dernier peut être constitué de plusieurs matériaux différents. De préférence, le coeur poreux est à base d'un premier matériau tel que décrit précédemment, c'est-à-dire que la structure formée par ce premier matériau est celle qui présente le poids le plus important dans le coeur poreux dans son ensemble, et de préférence occupe au moins 50% en poids du coeur poreux. Dans une variante de réalisation à plusieurs matériaux, le coeur poreux peut comprendre des matériaux différents organisés par couches entre le centre du coeur poreux et la surface du coeur poreux. Dans cette variante particulière, le coeur poreux se présente dans tous les cas dans une structure poreuse de plusieurs matériaux, et la densité de la structure poreuse formée par l'ensemble desdits matériaux est inférieure ou égale à 80%, voire inférieure ou égale à 60%, voire inférieure ou égale à 50%, de la densité de la même structure qui serait massive et intégralement formée dans ledit premier matériau.

Dans ce document, la densité du coeur poreux correspond à la densité moyenne du squelette dans son ensemble formé par le coeur poreux et non à la densité du premier matériau ou des matériaux constituant le coeur. Ainsi, la densité du coeur poreux est fonction de la porosité ou du taux de porosité du coeur poreux.

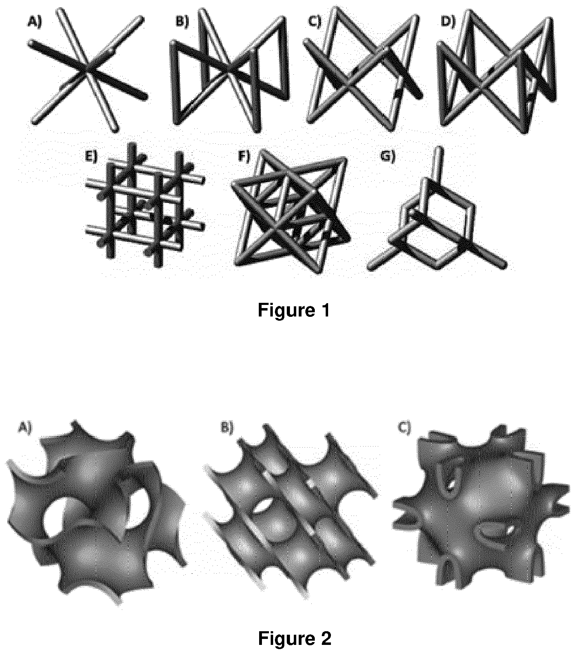

A cet effet, la figure 1 illustre, à titre d'exemples, des structures élémentaires représentant différentes structures en treillis qui peuvent être mises à profit dans cette première étape de réalisation d'un coeur poreux. La figure 2 illustre de même plusieurs structures élémentaires représentant des structures TPMS qui peuvent être réalisées dans le cadre de la première étape du procédé.

Selon un exemple de réalisation, le coeur poreux peut être une mousse présentant une structure aléatoire, c'est-à-dire comprenant des pores dont les positionnements et les dimensions sont aléatoires, de manière irrégulière. Selon un autre exemple de réalisation, le coeur poreux peut présenter une structure régulière, non aléatoire, par exemple de type réseau tridimensionnel (connu par exemple sous le terme « lattice »), présentant une structure formant un réseau répétitif. C'est le cas des structures en treillis susmentionnées.

La structure peut ainsi être choisie pour obtenir une porosité maximale tout en offrant une grande résistance mécanique.

Selon une variante de réalisation, le coeur poreux est conçu non pas seulement pour minimiser le poids global mais aussi pour remplir une ou plusieurs autres fonctions. Par exemple, il peut être conçu pour atteindre une résistance mécanique optimale dans certaines zones destinées à subir les plus fortes contraintes ou de fortes sollicitations mécaniques. Ainsi, la structure du coeur poreux peut répondre au mieux à ces fortes contraintes, en étant adaptée pour résister à ces fortes contraintes, par exemple par une répartition particulière non homogène du premier matériau formant ou compris dans le coeur poreux, de sorte à former des renforts mécaniques dans les zones concernées. Parmi les autres fonctions mécaniques qui peuvent être prises en compte lors de la conception de la structure du coeur poreux, en particulier si le composant horloger est une carrure ou une boîte de montre, on peut notamment prévoir des zones conformées pour absorber des chocs (pour isoler un mouvement horloger au sein d'une boîte ou d'une carrure, par exemple), des zones dédiées à l'assemblage dudit composant horloger avec d'autres composants (pour assembler un mouvement horloger au sein d'une boîte ou d'une carrure, par exemple), des zones permettant de renforcer l'étanchéité dudit composant horloger, ou encore des zones permettant la transmission du son (pour transmettre un son provenant d'un mouvement horloger, par exemple). Alternativement ou complémentairement, on peut également prévoir l'aménagement de zones flexibles pour permettre une déformation élastique du composant horloger, notamment dans le cas de figure d'un composant horloger se présentant par exemple sous la forme d'une lame d'un fermoir de bracelet. Ces zones flexibles peuvent également être dédiées à l'assemblage dudit composant horloger avec d'autres composants.

Selon l'invention, le coeur poreux peut comprendre des pores de plus petites dimensions à proximité de sa surface relativement à son centre, de manière à avoir une géométrie en surface particulièrement attrayante, éventuellement plus dense et/ou plus dure qu'en dehors de sa surface. Plus généralement, le coeur poreux peut donc présenter une structure non homogène, notamment présentant une différence entre son centre et sa surface, notamment une porosité non homogène. Cette différence peut consister en un gradient de la dimension des pores, qui augmente depuis la surface jusqu'au centre. En particulier, la surface du coeur poreux ou une couche donnée du coeur poreux peut être dénuée de pores, ou présenter très peu de pores. Complémentairement ou alternativement, une couche éventuelle peut être formée en surface du coeur afin de constituer une peau permettant de colmater les pores présents sur ladite surface, voire à proximité de ladite surface. Tout ou partie des variantes de coeurs poreux décrites précédemment peuvent naturellement être combinées. Par cette géométrie du coeur poreux, ce dernier permet de former un composant léger mais présentant une surface d'apparence attrayante, moins poreuse qu'en son centre, éventuellement dense et non poreuse en surface, et éventuellement relativement dure, de dureté supérieure à celle de son centre.

En complément, la structure peut être conçue pour optimiser l'adhérence d'un revêtement de surface se présentant sous la forme d'une couche de décoration, en particulier d'une fine couche superficielle de décoration.

Notamment, il est ainsi possible d'obtenir un composant horloger, notamment une carrure ou une boîte, dont la surface extérieure est optionnellement revêtue d'une telle couche de décoration pouvant par exemple être déposée par un procédé de dépôt physique par phase vapeur PVD, ou de dépôt chimique en phase vapeur CVD, ou de dépôt de couche atomique ALD. Par exemple, une couche, déposée par exemple par dépôt PVD sur le coeur, destinée à produire un aspect ou une couleur particulière peut être ajoutée sur la première couche, par exemple selon une épaisseur préférentiellement comprise entre 500 nm et 20 µm d'un métal ou d'un alliage métallique, par exemple de type Au, Ag, Pt, Pd. Un avantage de ce revêtement de surface provient du fait qu'il permet de former une couche de décoration, qui répond aux hautes exigences de l'horlogerie de luxe. Par ailleurs, le revêtement de surface peut notamment être prévu pour présenter une teinte attractive, notamment une couleur ou un effet qui ne peut pas être atteint par le premier matériau.

Selon une variante de réalisation, le procédé de fabrication permet avantageusement de créer une zone de transition à l'interface entre le coeur poreux et le revêtement de surface optionnel, qui comprend les matériaux respectifs du coeur poreux et du revêtement de surface imbriqués, pour optimiser l'adhésion du revêtement de surface.

Selon une variante de réalisation, le procédé de fabrication peut également comprendre une étape de remplissage de la majorité, voire de l'intégralité ou de la quasi-intégralité, des pores du coeur poreux avec un matériau donné. Dans un tel cas, nous continuons de définir le coeur poreux comme la structure considérée en dehors de son matériau de remplissage, le composant consistant en la réunion du coeur poreux et de son matériau de remplissage. Ce dernier est avantageusement un matériau résilient, comme un polymère.

Avantageusement, une telle étape de remplissage des pores permet de proposer un composant selon l'invention qui est en outre doté d'un coeur comprenant un matériau permettant de dissiper les chocs et ainsi de préserver au mieux le squelette formé par le coeur poreux.

Dans tous les cas, le procédé de fabrication peut mettre en oeuvre une étape supplémentaire optionnelle, de traitement mécanique ou thermique ou laser intermédiaire, dont la fonction est de densifier la surface du coeur poreux, notamment en fermant au moins une partie des pores en surface du coeur poreux. Celle-ci peut par exemple être une opération de sablage ou mettant en oeuvre un laser, en particulier un laser picoseconde ou femtoseconde. Un autre traitement supplémentaire peut consister à augmenter la rugosité de surface du coeur poreux.

Encore un autre traitement supplémentaire peut consister en un nettoyage ou un lavage ou un traitement plasma ou une déposition d'un promoteur d'adhésion. Plus généralement, l'étape supplémentaire peut être prévue pour améliorer ou contrôler la surface du coeur poreux. Dans tous les cas, le procédé permet de former dans au moins une zone du composant une surface de porosité réduite relativement à la porosité en dehors de ladite surface du coeur poreux.

Le procédé de fabrication peut ensuite comprendre des traitements complémentaires, optionnels.

Particulièrement, le procédé peut mettre en oeuvre une étape optionnelle de finition, notamment agissant sur l'état de surface et/ou la couleur d'au moins une partie de la surface du coeur poreux, voire de la surface d'une couche de revêtement, pour lui donner un aspect esthétique particulier et optimiser sa géométrie finale, en effaçant par exemple les éventuels défauts de surface. Une telle étape peut par ailleurs conférer une fonctionnalité particulière à la surface. Une telle étape peut être une étape de rectification et/ou de polissage et/ou de microbillage et/ou de terminaison et/ou de décoration et/ou de coloration. Elle peut être mise en oeuvre de manière mécanique et/ou de manière électrochimique et/ou par des moyens optiques, par exemple par un laser picoseconde ou femtoseconde. Différentes techniques peuvent ainsi être combinées afin de mettre en oeuvre cette étape de finition. Elle permet ainsi par exemple d'obtenir un composant horloger présentant un état de surface final de type texturé, poli, sablé ou satiné, et/ou présentant une couleur spécifique, ou une combinaison de ces états.

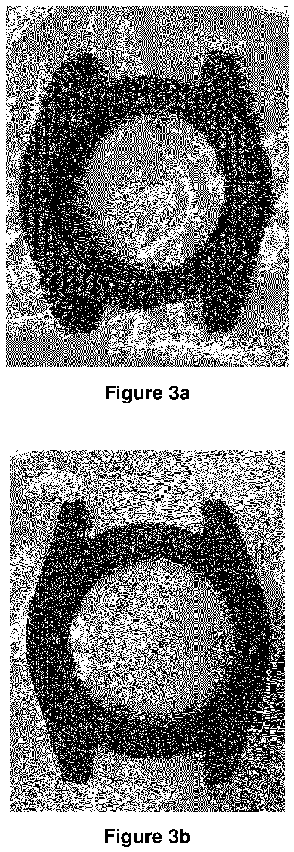

Les figures 3a et 3b illustrent l'application de la première étape du procédé de fabrication selon l'invention dans le cadre d'exemples particuliers de fabrication d'une carrure pour une montre bracelet. Les figures 3a et 3b illustrent ainsi le coeur poreux d'une carrure de montre, issu de la première étape du procédé, selon deux variantes de réalisation. Dans les deux cas, ce coeur poreux est réalisé par fabrication additive dans un premier matériau qui est le titane, dans une structure en maille présentant respectivement des dimensions de maillage de 500 µm (figure 3a) et 200 µm (figure 3b). Le taux de porosité correspondant est de respectivement 70% et 48%. La masse volumique est respectivement de 1.6 g/cm³ et 2.3 g/cm³. En remarque, en variante, le premier matériau utilisé pourrait être du magnésium Mg ou de l'aluminium Al ou un alliage à base de Mg ou un alliage à base d'AI ou un alliage à base de Ti, en remplacement du titane, de sorte à obtenir un coeur poreux de même structure encore plus léger. En effet, avec un alliage de Mg de masse volumique de 1.7 g/cm³ et une porosité d'environ 50%, il est possible d'obtenir une masse volumique apparente de 0.80 - 0.85 g/cm³ du coeur poreux. Il est également possible d'envisager l'utilisation d'alliages précieux à base d'or Au, ou de palladium Pd, ou de platine Pt, pour obtenir un composant en métal précieux avec une densité nettement plus faible que celle de l'alliage massif. En outre, il est par ailleurs possible d'envisager l'utilisation d'une céramique, telle qu'une zircone, pour obtenir un composant en céramique avec une densité nettement plus faible que celle de ladite céramique.

L'invention porte plus généralement sur un composant, notamment un composant horloger, obtenu par un procédé de fabrication selon l'invention, qui ne se limite naturellement pas à la description précédente.

Ainsi, l'invention permet de former tout composant, notamment tout composant horloger, comprenant un coeur poreux comprenant un premier matériau, le coeur poreux montrant une densité inférieure ou égale à 80%, voire inférieure ou égale à 60%, voire inférieure ou égale à 50%, de la densité du premier matériau massif, le au moins un coeur poreux présentant au moins une zone pour laquelle sa porosité au niveau de sa surface est inférieure à sa porosité en dehors de sa surface.

Tout ou partie de la surface du coeur poreux, notamment au moins au niveau d'une zone du coeur poreux, est notamment prévue pour présenter une densité élevée. Ainsi, la densité de la surface du coeur poreux peut être notamment supérieure ou égale à 90%, voire supérieure ou égale à 99% de la densité du premier matériau massif.

Ainsi, avantageusement, la surface du coeur poreux peut présenter un taux de porosité inférieur ou égal à 0.5%, voire inférieur ou égal à 0.1%, voire inférieur ou égal à 0.05 %, voire inférieur ou égal à 0.01 %. En remarque, le taux de porosité a des conséquences aussi bien esthétiques que fonctionnelles. Selon la taille des défauts découlant de la porosité, une surface polie mettra par exemple en évidence la porosité, qui peut se manifester par une irrégularité de la réflexion de la frange de lumière. De plus, la porosité peut nuire à la fonctionnalité de la surface et rendre celle-ci perméable, donc inefficace comme barrière de protection (thermique, chimique...). Il est donc intéressant d'obtenir une surface du composant présentant une faible porosité, et optionnellement une surface du coeur poreux présentant une porosité la plus faible possible.

D'autre part, la surface du coeur poreux peut présenter une épaisseur suffisante pour contribuer à la robustesse du composant horloger terminé. Par épaisseur de la surface du coeur poreux, on comprend l'épaisseur de la zone de densité élevée et/ou de porosité faible, notamment la zone en surface dont la densité est supérieure ou égale à 90%, voire supérieure ou égale à 99% de la densité du premier matériau massif, et/ou la zone en surface dont le taux de porosité est inférieur ou égal à 0.5%, voire inférieur ou égal à 0.1%, voire inférieur ou égal à 0.05 %, voire inférieur ou égal à 0.01 %. Naturellement, la zone dont la surface du coeur poreux est de porosité réduite se constate sur une certaine épaisseur depuis la surface extérieure du coeur poreux. Avantageusement, cette épaisseur est très faible pour conserver la légèreté maximale du composant, ce qui permet avantageusement d'utiliser abusivement le terme de surface, même si le phénomène se mesure dans un volume. Avantageusement, cette épaisseur est comprise entre 1 et 500 µm, voire entre 10 et 200 µm, voire entre 20 et 100 µm sur le composant horloger terminé après que la surface ait subi un éventuel traitement, comme par exemple un traitement de rectification, de terminaison et/ou de polissage. Elle se mesure en faisant abstraction d'un éventuel revêtement de surface très fin qui serait optionnellement ajouté sur la surface du coeur poreux. De plus, cette surface du coeur poreux peut présenter un état de surface texturé, poli, sablé ou satiné. Après un tel traitement de surface, l'épaisseur résultante de la surface du coeur poreux peut être inférieure à celle obtenue initialement : par exemple, dans le cas d'une surface de coeur poreux d'épaisseur comprise entre 150 et 200 µm, un polissage par un moyen mécanique ou par texturation laser peut réduire cette épaisseur finale à environ 80 µm.

La surface du coeur poreux est optionnellement prévue pour présenter une grande dureté. Elle peut ainsi présenter une dureté de surface supérieure ou égale à 300HV, voire supérieure à 500HV, voire supérieure ou égale à 600HV, voire supérieure ou égale à 900HV. En alternative ou en complément, la surface du coeur poreux est optionnellement prévue pour présenter une teinte attractive, notamment une couleur ou un effet qui ne peut pas être atteint par le coeur poreux formé à partir du premier matériau.

Comme mentionné, le procédé de fabrication permet avantageusement de créer une zone de transition à l'interface entre le coeur poreux et la surface du coeur poreux, pour optimiser les propriétés et/ou l'adhésion de la surface du coeur poreux.

Un revêtement de surface optionnel peut comprendre un deuxième matériau, qui peut être identique ou différent du premier matériau.

Le procédé décrit précédemment présente l'avantage d'être compatible avec un nombre important de matériaux. Par exemple, le premier matériau du coeur poreux peut être un métal ou un alliage métallique ou un superalliage métallique, notamment comprenant un ou des éléments parmi Fe, Mg, Al, Ti, Au, Pd, Pt, Ni, Si, et/ou Co. Ce premier matériau peut aussi être un alliage amorphe ou partiellement amorphe, ou un polymère, ou une céramique, par exemple une céramique à base d'alumine ou de zircone.

L'invention est particulièrement adaptée à tout composant, en particulier à tout composant horloger, notamment à tout composant d'habillage, comme un composant se présentant sous la forme d'une carrure de montre ou d'un bracelet.

Par ailleurs, selon une déclinaison particulière de l'invention, au moins une portion ou une région du composant, notamment du composant horloger, pourrait comprendre un coeur poreux comprenant un revêtement de surface selon l'invention, le reste du composant pouvant comprendre toute autre architecture, notamment conventionnelle. Ainsi, l'invention porte également sur un composant horloger qui comprend un coeur partiellement poreux, c'est-à-dire un coeur poreux uniquement dans certaines portions, ou plusieurs coeurs poreux reliés entre eux par une ou des portions non poreuses. En variante, le composant horloger pourrait comprendre un coeur constitué de plusieurs portions poreuses différentes, par la structure de leur porosité et/ou par le ou leurs matériaux. Dans tous les cas, le composant horloger comprend donc au moins un coeur poreux. Autrement dit, le coeur du composant horloger peut être en tout ou partie composé dudit au moins un coeur poreux.

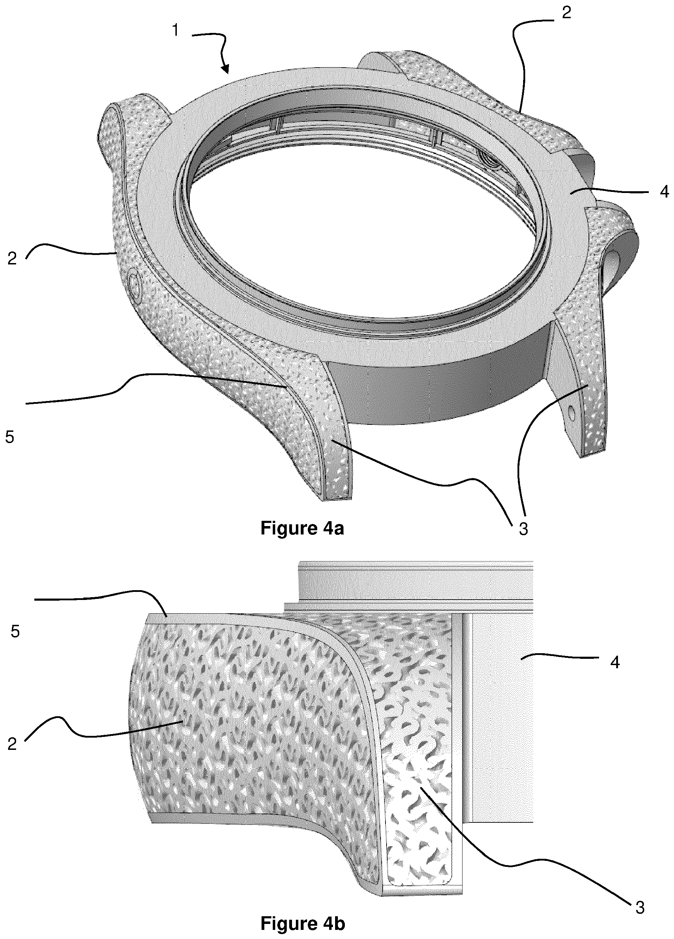

A titre d'exemple, les figures 4a et 4b représentent une ébauche de carrure 1 dotée de portions formant des coeurs poreux. Ces portions peuvent par exemple préfigurer des flancs 2 ou des cornes 3 d'une carrure. Ces coeurs poreux comprennent un premier matériau ou sont à base d'un premier matériau, de densité inférieure ou égale à 80%, voire inférieure ou égale à 60%, voire inférieure ou égale à 50%, de la densité du premier matériau massif. En remarque, les coeurs poreux de ces réalisations selon les figures 4a et 4b comprennent des arêtes 5 massives, non poreuses, pour former des zones renforcées aux endroits fortement sollicités ou exposés. D'autres zones de surface, avantageusement toute la surface de ces coeurs poreux, seront traitées selon l'invention pour atteindre une surface de faible porosité, comme décrit précédemment.

L'invention porte aussi sur une pièce d'horlogerie, notamment une montre bracelet, qui comprend au moins un tel composant horloger.

Finalement, l'invention permet donc de combiner deux objectifs majeurs pour un composant, notamment un composant horloger d'habillage, qui n'étaient pas atteints jusqu'ici. Elle permet d'obtenir à la fois un composant léger et un composant mécaniquement robuste, présentant une surface aux propriétés satisfaisantes, à savoir résistante et/ou dure et/ou esthétiquement attrayante. Il est également possible de fonctionnaliser la surface de faible porosité du coeur poreux ou un revêtement optionnel décoratif déposé sur cette surface, par exemple grâce à une texturation laser, et/ou d'obtenir des états de surface et finitions de type sablé, satiné, ou poli.

L'invention a été décrite dans le cadre d'un composant horloger. Il ressort toutefois qu'elle pourrait être mise en oeuvre pour tout autre domaine, par exemple automobile, aéronautique, spatial, médical, etc., pour lequel il est utile de disposer de composants légers et robustes.

## Revendications

1. Composant, notamment composant horloger, **caractérisé en ce qu'**il comprend au moins un coeur poreux, comprenant un premier matériau ou à base d'un premier matériau, de densité inférieure ou égale à 80%, voire inférieure ou égale à 60%, voire inférieure ou égale à 50%, de la densité du premier matériau massif, et **en ce que** le au moins un coeur poreux présente au moins une zone pour laquelle sa porosité au niveau de sa surface est inférieure à sa porosité en dehors de sa surface.

2. Composant selon la revendication précédente, **caractérisé en ce que** la porosité plus faible de ladite au moins une zone s'étend au niveau de la surface sur une épaisseur mesurée depuis la surface extérieure, en dehors d'un revêtement de surface optionnel, comprise entre 1 et 500 µm, voire entre 10 et 200 µm, voire entre 20 et 100 µm.

3. Composant selon l'une des revendications précédentes, **caractérisé en ce que** le premier matériau du au moins un coeur poreux est un métal ou un alliage métallique ou un superalliage métallique, notamment comprenant des éléments comme Fe, Mg, Al, Ti, Au, Pd, Pt, Ni, Si, et/ou Co, et/ou est un alliage amorphe ou partiellement amorphe, ou est un polymère, ou est une céramique, notamment une céramique à base d'alumine ou de zircone.

4. Composant selon l'une des revendications précédentes, **caractérisé en ce que** le au moins un coeur poreux se présente en mousse métallique ou est un squelette formé par un réseau poreux régulier ou irrégulier, notamment de type en treillis, TPMS, alvéolaire, cellulaire, ou encore trabéculaire.

5. Composant selon l'une des revendications précédentes, **caractérisé en ce que** le taux de porosité au niveau de la surface de ladite au moins une zone est inférieur ou égal à 0.5%, voire inférieur ou égal à 0.1%, voire inférieur ou égal à 0.05 %, voire inférieur ou égal à 0.01 %, et/ou **en ce que** la densité au niveau de la surface de ladite au moins une zone est supérieure ou égale à 90%, voire supérieure ou égale à 99%, de la densité du premier matériau massif.

6. Composant selon l'une des revendications précédentes, **caractérisé en ce qu'**il présente une dureté de surface de ladite au moins une zone supérieure ou égale à 300HV, voire supérieure à 500HV, voire supérieure ou égale à 600HV, voire supérieure ou égale à 900HV.

7. Composant selon l'une des revendications précédentes, **caractérisé en ce que** le au moins un coeur poreux présente des pores au niveau de la surface de ladite au moins une zone de dimension inférieure ou égale à la dimension des pores en dehors de cette surface et/ou **en ce qu'**il comprend une surface de ladite au moins une zone dénuée de pores et/ou **en ce qu'**il comprend une porosité non homogène sur son épaisseur entre sa surface et son au moins un coeur au niveau de ladite au moins une zone, notamment un gradient de la dimension des pores, qui augmente depuis la surface jusqu'au centre.

8. Composant selon l'une des revendications précédentes, **caractérisé en ce que** le au moins un coeur poreux comprend des pores, et **en ce que** la majorité, voire l'intégralité ou la quasi-intégralité, des pores du au moins un coeur poreux est remplie avec un matériau de remplissage, notamment un matériau résilient, comme un polymère.

9. Composant selon l'une des revendications précédentes, **caractérisé en ce qu'**il comprend un revêtement de surface formant une couche de décoration, notamment présentant une épaisseur comprise entre 500 nm et 20 µm, d'un métal ou d'un alliage métallique, disposé sur la surface de ladite au moins une zone, le revêtement de surface comprenant optionnellement un état de surface texturé, poli, sablé ou satiné.

10. Composant selon l'une des revendications précédentes, **caractérisé en ce qu'**il est un composant d'habillage horloger, comme un composant se présentant sous la forme d'une boîte de montre ou d'un bracelet.

11. Pièce d'horlogerie, **caractérisée en ce qu'**elle comprend au moins un composant selon l'une des revendications précédentes.

12. Procédé de fabrication d'un composant, notamment d'un composant horloger, **caractérisé en ce qu'**il comprend une étape de réalisation d'au moins un coeur poreux, comprenant un premier matériau ou à base d'un premier matériau, de densité inférieure ou égale à 80%, voire inférieure ou égale à 60%, voire inférieure ou égale à 50%, de la densité du premier matériau massif, le au moins un coeur poreux présentant au moins une zone pour laquelle sa porosité au niveau de sa surface est inférieure à sa porosité en dehors de sa surface.

13. Procédé de fabrication d'un composant selon la revendication précédente, **caractérisé en ce que** l'étape de réalisation du au moins un coeur poreux comprend une étape d'attaque chimique d'une ébauche massive dans le premier matériau ou à base du premier matériau ou une étape de fabrication additive, formant au moins un coeur poreux en mousse métallique ou sous forme de squelette formé par un réseau poreux régulier ou irrégulier, notamment de type en treillis, TPMS, alvéolaire, cellulaire, ou encore trabéculaire.

14. Procédé de fabrication d'un composant selon l'une des revendications 12 ou 13, **caractérisé en ce qu'**il comprend une étape de traitement mécanique ou thermique ou laser pour densifier la surface de ladite au moins une zone du au moins un coeur poreux, notamment en fermant au moins une partie des pores en surface du au moins un coeur poreux, notamment par un sablage ou par laser, en particulier un laser picoseconde ou femtoseconde.

15. Procédé de fabrication d'un composant selon l'une des revendications 12 à 14, **caractérisé en ce qu'**il comprend une étape finale de rectification et/ou de polissage et/ou de microbillage et/ou de décoration, pour obtenir un état de surface final de type texturé, poli, sablé ou satiné de la surface du composant.
